# FASCICULE DE BREVET EUROPEEN

(11) **EP 2 164 588 B1**
(45) Date de publication et mention de la délivrance du brevet: **18.04.2012**
(21) Numéro de dépôt: 08806054.6
(22) Date de dépôt: 23.06.2008
(51) Int. Cl.: B01D 9/00, B01D 9/02

(54) **APPAREIL DE CRISTALLISATION A CIRCULATION FORCEE**
KRISTALLISIERUNGSVORRICHTUNG MIT VERSTÄRKTEM FLUSS
FORCED FLOW CRYSTALLISATION APPARATUS

(30) Priorité: 09.07.2007 FR 0756346
(43) Date de publication de la demande: 24.03.2010
(73) Titulaire: Crystal-Evap Consult, 91210 Draveil (FR)
(72) Inventeur: MALFAND, Michel, F-91210 Draveil (FR)
(74) Mandataire: De Souza, Paula
(86) Numéro de dépôt international: PCT/FR2008/051122
(87) Numéro de publication internationale: WO 2009/007577

(56) Documents cités:
- WO-A-93/19826
- US-A- 4 294 807
- US-A1- 2003 180 202

## Description

La présente invention concerne un appareil de cristallisation du soluté contenu dans une solution à traiter.

On admet généralement que les appareils de cristallisation connus sont de trois types.

Il s'agit d'abord des appareils de cristallisation dit à circulation forcée qui comprennent une chambre destinée à contenir la solution à traiter et un circuit externe à cette chambre pour amener ladite solution à circuler, sous l'effet d'une pompe de circulation, depuis une sortie située en position basse de ladite chambre jusqu'à une entrée située en position haute de cette dernière, en passant par un échangeur de chaleur pour créer un état de sursaturation au sein de la solution ; ce type d'appareils conduit à des cristaux de taille moyenne (habituellement 250 - 400 µm) avec une dispersion assez large de la granulométrie.

Il s'agit ensuite des appareils de cristallisation du type Oslo qui comprennent une chambre destinée à recevoir la solution à traiter et dans laquelle cette solution est amenée à circuler de la partie haute à la partie basse à travers un tube central descendant, avant de remonter dans la chambre autour de ce tube et d'en être extraite, sous une forme relativement claire, c'est-à-dire peu chargée en cristaux, par un circuit externe à la chambre ramenant cette solution à la partie haute de la chambre après passage dans un échangeur de chaleur pour créer un état de sursaturation ; les cristaux obtenus avec ce type d'appareils sont relativement gros (habituellement 1,5 - 2 mm) avec une distribution moyenne de la granulométrie.

Il s'agit enfin des appareils de cristallisation dit à chicane et tube d'aspiration (DTB), dans lesquels la solution à traiter est amenée à circuler, sous l'effet d'un agitateur créant un mouvement ascendant, de bas en haut à travers un tube central puis de haut en bas autour de ce tube, avant de parvenir dans une zone calme où la solution est peu chargée en cristaux et d'où cette dernière est extraite, avant d'être réchauffée pour dissoudre les cristaux les plus fins (fines) puis réintroduite à la base de l'appareil ; les cristaux obtenus sont relativement gros (habituellement 1 - 2mm) en raison de l'élimination des fines, mais avec une distribution relativement large en raison de la destruction mécanique des cristaux par l'agitateur ; en outre, la mise en oeuvre de cet agitateur présente divers inconvénients, tels que difficulté de mise en place, problème d'étanchéité, nécessité d'une surveillance pour détecter un éventuel blocage.

Comme on l'aura compris, les appareils existants décrits ci-dessus présentent des difficultés de conception et de mise en oeuvre et/ou des insuffisances en termes de granulométrie et de distribution de cette dernière.

Le but de la présente invention est de proposer un appareil de cristallisation de conception simple et permettant d'obtenir des cristaux dont la granulométrie peut être réglée à volonté, avec une dispersion étroite de la granulométrie.

A cet effet, l'appareil selon l'invention comprend :
- une première et une deuxième chambres destinées à recevoir ladite solution à traiter,
- des moyens pour maintenir au moins une partie de cette solution dans un état de sursaturation pour y induire la formation de particules cristallines du soluté,
- des moyens pour assurer une circulation de ladite solution de la première chambre à la deuxième chambre pour maintenir en suspension lesdites particules cristallines,
- des moyens pour isoler, au sein de la deuxième chambre, dans au moins une zone calme en communication avec cette dernière, une partie de la solution destinée à être présente dans cette deuxième chambre,
- un premier circuit pour extraire sélectivement de ladite zone calme, un premier courant de liquide comprenant des particules cristallines de soluté de plus petite dimension et pour recycler ce premier courant dans la première chambre, et
- un deuxième circuit pour extraire sélectivement de la deuxième chambre, un deuxième courant de liquide comprenant des particules cristallines de soluté de plus grande dimension, et pour amener ce deuxième courant dans la première chambre, l'extrémité avale du premier circuit débouchant dans le deuxième circuit de manière à ce que les premier et deuxième courants de liquide soient amenés à s'écouler dans le même sens dans ledit deuxième circuit.

Les moyens pour assurer la circulation de la solution de la première chambre à la deuxième chambre comprennent une pompe de circulation disposée sur le premier circuit.

On comprendra aisément que le deuxième circuit, c'est-à-dire celui suivi par le courant liquide contenant les particules cristallines (cristaux) les plus grosses, ne nécessite pas la mise en oeuvre d'une pompe de circulation puisque ce courant sera entraîné vers la première chambre sous l'effet du premier courant circulant dans le premier circuit.

Du fait de l'absence de cette pompe, les gros cristaux ne seront soumis à aucune contrainte mécanique de nature à les réduire en cristaux plus fins, de sorte qu'il est possible d'obtenir des cristaux relativement gros avec une distribution étroite de la granulométrie.

Selon un mode de réalisation, la partie d'extrémité avale du premier circuit est disposée sensiblement concentriquement dans le deuxième circuit ; cette disposition conduit à une aspiration et donc à un entraînement du courant comprenant les gros cristaux, avec un minimum de turbulence, ce qui élimine tout risque de destruction de ces gros cristaux.

Les moyens pour maintenir la solution dans un état de sursaturation comprennent de préférence un dispositif de réchauffage du premier courant de liquide, disposé sur ledit premier circuit, et une sortie de vapeur, prévue sur la deuxième chambre ; dans ce cas, le dispositif de réchauffage peut comprendre un échangeur de chaleur indirect comprenant un circuit pour un fluide caloporteur et un circuit pour un fluide à réchauffer, ce dernier circuit constituant une partie dudit premier circuit.

On notera que lorsque l'appareil selon l'invention est destiné à la cristallisation d'un soluté contenu dans une solution comprenant un mélange qui est le siège d'une réaction exothermique, les moyens pour maintenir la solution dans un état de sursaturation comprennent la chaleur dégagée par cette réaction ; à titre d'exemple d'une telle solution, on peut citer un mélange d'acide sulfurique et d'ammoniac pour l'obtention de sulfate d'ammonium.

Comme on le sait, la formation de cristaux du soluté est la conséquence de la désursaturation résultant soit du dépôt de soluté sur des cristaux existants ce qui conduit à des gros cristaux, soit de la formation de nouveaux cristaux de soluté (germes) de faible granulométrie (fines).

On comprendra aisément que si l'on désire des gros cristaux de soluté, il convient dans toute la mesure du possible d'éviter la formation des fines ou de les éliminer.

Dès lors, selon un mode de réalisation particulier, l'appareil selon l'invention peut comprendre un troisième circuit pour éliminer des particules cristallines d'une granulométrie donnée, de préférence les plus petites parmi les particules cristallines présentes dans le premier courant de liquide ou dans la zone calme ou l'une des zones calmes de la deuxième chambre.

Ce troisième circuit peut comprendre un séparateur solide-liquide disposé sur le premier circuit, pour former un troisième courant de liquide contenant lesdites particules cristallines de granulométrie donnée, et des moyens de chauffage de ce troisième courant pour dissoudre lesdites particules cristallines, ce troisième circuit se terminant dans le premier circuit.

Selon une variante, ledit troisième circuit prend naissance dans la zone calme ou dans l'une des zones calmes de la deuxième chambre pour en extraire lesdites particules cristallines de granulométrie donnée sous la forme d'un courant de liquide, comprend des moyens de chauffage de ce courant pour dissoudre lesdites particules cristallines et se termine dans le premier circuit.

Selon un mode de réalisation, l'appareil selon l'invention est caractérisé en ce que la deuxième chambre comprend une paroi latérale cylindrique sensiblement verticale et est fermée par une paroi d'extrémité supérieure et une paroi d'extrémité inférieure, en ce que la première chambre comprend une partie tubulaire s'étendant sensiblement concentriquement à l'intérieur de la deuxième chambre en traversant la paroi d'extrémité inférieure de cette dernière, et en ce que lesdits moyens pour isoler au moins une partie de la solution dans la deuxième chambre comprennent une cloison qui prend naissance sur la paroi latérale cylindrique de la deuxième chambre le long d'une partie au moins de cette dernière, s'étend sensiblement radialement vers l'intérieur de cette chambre, puis se prolonge en direction de la première chambre sensiblement parallèlement à la partie tubulaire de cette dernière, pour définir ainsi ladite zone calme avec ladite paroi latérale cylindrique.

Dans le cadre du mode de réalisation ci-dessus, le deuxième circuit comprend un conduit prenant naissance dans la deuxième chambre au voisinage de la zone où la paroi d'extrémité inférieure de cette deuxième chambre est traversée par la partie tubulaire de la première chambre, ledit deuxième circuit se terminant dans cette dernière ; dans ce même appareil, la première chambre comprend à sa partie basse une zone destinée à recevoir lesdites particules cristallines de plus grande dimension, cette zone étant pourvue d'une sortie pour ces particules.

L'invention va maintenant être décrite de manière plus détaillée en référence à un mode de réalisation particulier donné uniquement à titre d'illustration et représenté sur le dessin annexé dans lequel :

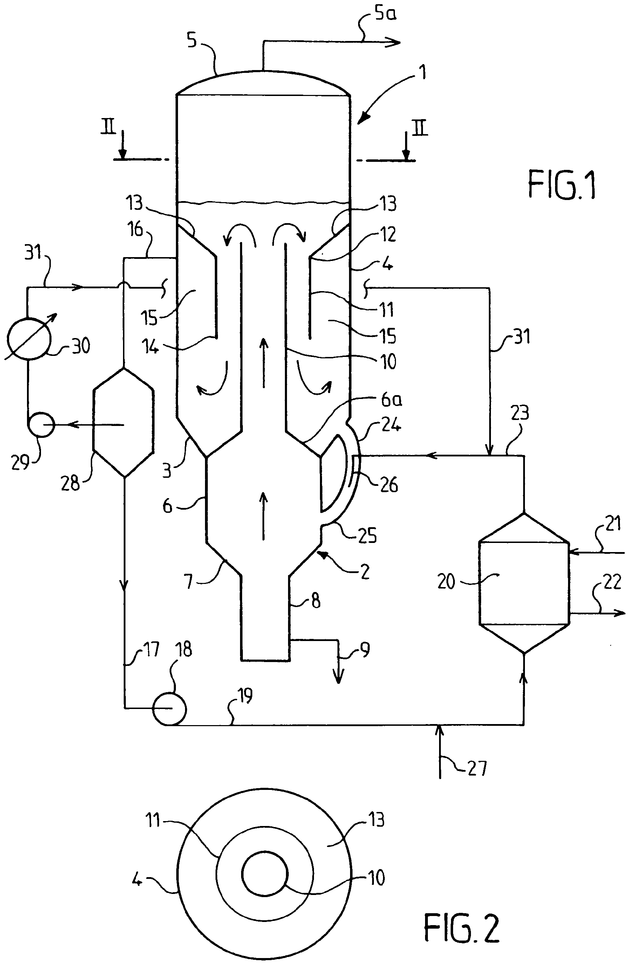

- la figure 1 est une coupe verticale schématique de l'appareil de cristallisation, et
- la figure 2 est une coupe transversale selon la ligne II-II de la figure 1.

Les figures susvisées montrent un appareil de cristallisation qui comprend une chambre supérieure 1 surmontant une chambre inférieure 2.

La chambre supérieure 1 comprend une partie inférieure tronconique 3 dont la grande base supérieure est raccordée à une paroi cylindrique verticale 4 fermée à son extrémité supérieure par une surface d'extrémité supérieure 5 pourvue d'une sortie de vapeur 5a.

La chambre inférieure 2 comprend pour sa part une paroi latérale sensiblement verticale et cylindrique 6 se terminant à sa base par une partie tronconique 7 dont la petite base inférieure est prolongée vers le bas par une partie cylindrique 8 fermée à sa partie inférieure et pourvue, au voisinage de cette fermeture, d'une sortie 9 de liquide fortement chargé en gros cristaux.

La surface 6 est raccordée à sa partie supérieure à la petite base de la partie tronconique 3, avant de se prolonger par une surface tronconique 6a dont la petite base se termine par un tube vertical 10 disposé sensiblement concentriquement à l'intérieur de la chambre 1.

La hauteur de ce tube 10 est choisie pour que son extrémité supérieure soit située à quelque distance au-dessous du niveau de la solution destinée à être traitée dans l'appareil.

Par ailleurs, une cloison cylindrique 11 est disposée concentriquement dans la chambre 1 et autour du tube 10 ; cette cloison 11 est raccordée par son bord périphérique supérieur 12 à la paroi latérale 4 par une surface inclinée montante 13.

On notera que le bord périphérique inférieur 14 de la cloison 11 est à une distance suffisante de l'extrémité inférieure de la chambre 1 pour que la zone 15 définie entre ladite cloison 11, la paroi latérale 4 et la surface inclinée 13 soit une zone calme non perturbée par les turbulences existant à l'extérieur de cette même zone 15.

La paroi latérale 4 est pourvue, au niveau de la zone 15, d'une sortie du liquide 16 raccordée à l'aspiration 17 d'une pompe 18 dont le refoulement 19 communique avec l'entrée du circuit de fluide à réchauffer d'un échangeur de chaleur indirect 20, dont le circuit de fluide colporteur (vapeur d'eau par exemple) comprend une arrivée 21 et une sortie 22.

La sortie du circuit de fluide réchauffé de l'échangeur 20, est raccordée à une tubulure 23 destinée à ramener le fluide réchauffé issu de l'échangeur 20 dans la chambre 2.

Selon une caractéristique essentielle de l'invention, la partie tronconique 3 est pourvue d'une sortie 24 communiquant avec l'intérieur de la chambre 2 par un conduit 25.

La tubulure 23 débouche dans le conduit 25 de manière à ce que son extrémité avale 26 soit disposée concentriquement dans ce conduit 25 et que l'écoulement du fluide dans ce dernier se fasse vers la chambre 2.

L'appareil ainsi décrit est complété par une arrivée 27 de solution à traiter, celle-ci étant située en amont de l'échangeur 20.

Le fonctionnement de cet appareil est comme suit.

La solution à traiter, c'est-à-dire celle dont on souhaite cristalliser le soluté, est introduite dans l'appareil par l'arrivée 27 pour atteindre le niveau désiré dans la chambre 1, la pompe 18 étant en fonctionnement ; la concentration en soluté de cette solution dépendra bien entendu de la nature du soluté et est choisie pour que ladite solution soit proche de la saturation.

Bien entendu, le niveau dans la chambre 1 est maintenant sensiblement constant pendant toute la durée des opérations de cristallisation en réglant par exemple le débit de solution fraîche amenée par l'arrivée 27 ou en extrayant de la liqueur mère en un point quelconque de l'installation.

L'échangeur de chaleur 20 est pour sa part mis en fonctionnement dès que le niveau est atteint. Cet échangeur est réglé pour évaporer suffisamment de liquide afin d'atteindre la sursaturation d'une partie au moins de la solution ; lorsque ceci est approprié, cette évaporation peut être facilitée en reliant la sortie de vapeur 5a à une source de vide.

Dans ces conditions, il y a formation de germes ou, si de petits cristaux sont déjà présents dans la solution, grossissement de ces derniers.

La vitesse d'écoulement dans les chambres 1 et 2 est réglée, au moyen de la pompe 18 qui est de préférence à débit variable, pour que les cristaux et germes formés soient maintenu en suspension et que seuls les germes et les cristaux ayant une granulométrie égale ou inférieure à une valeur seuil soient amenés jusqu'à la sortie 16 à partir de laquelle ils sont évacués de la zone 15.

En fait, dans cette zone, les particules cristallines se répartissent selon un gradient de la granulométrie, les particules les plus fines étant situées dans la partie la plus haute.

Le liquide clair, c'est-à-dire relativement peu chargée en particules fines, issu de la sortie 16 est ensuite amenée sous l'effet de la pompe 18 dans l'échangeur 20 où il est porté à une température appropriée avant d'être introduit dans la chambre 1 via les organes 23, 25 et 26.

Au cours de leur déplacement dans la chambre 2, le tube 10, la chambre 1 et la zone 15, puis retour vers la chambre 2, les germes et les particules cristallines grossissent et effectuent ce cycle jusqu'à atteindre une taille suffisante à partir de laquelle les grosses particules cristallines ainsi formées se rassemblent à la base de la chambre 1 à partir de laquelle elles sont évacuées par la sortie 24 vers la chambre 2 sous l'effet d'aspiration/d'entraînement du liquide s'écoulant dans l'extrémité avale 26 du tube 23.

Il est à noter que les dimensions relatives des conduits 23, 24, 26 sont telles que les cristaux puissent être évacués sans encombre de la chambre 1.

Etant donné que ces grosses particules cristallines ne sont soumises à aucune contrainte mécanique, elles ne subissent aucune rupture/désintégration et se rassemblent entières dans la partie cylindrique 8 d'où elles sont extraites par la sortie 9.

Selon une autre caractéristique de l'invention, si l'on désire des particules cristallines de granulométrie encore plus élevée, on prévoit un séparateur solide-liquide 28 entre la sortie 16 et l'aspiration 17 de la pompe 18.

La fraction de liquide la plus faiblement chargée en particules cristallines suit son parcours jusqu'à la pompe 18.

Quant à la fraction du liquide la plus fortement chargée en particules cristallines (représentant habituellement environ 1/10 à 1/15 du liquide entrant dans le séparateur), elle est amenée via une pompe de circulation 29 dans un échangeur de chaleur 30 où elle est portée à une température suffisante pour dissoudre lesdites particules cristallines, avant d'être ramenée par le conduit 31 dans le tubulure 23.

Dans ces conditions, lors de la désursaturation, le soluté se dépose non pas sur les cristaux les plus fins (fines), mais sur des particules cristallines plus grosses, ce qui conduit à l'obtention finale de gros cristaux.

Selon une variante, le séparateur 28 est omis et l'aspiration de 1a pompe 29 est directement reliée à 1a zone calme 15, de préférence à distance de la sortie 16.

Selon une autre variante, il serait possible de prévoir au moins un autre circuit externe aux chambres 1 et2, de même structure que le circuit 16-17-18-19-20-23-26 mais prenant naissance en un autre point de la zone calme 15 et se terminant dans un circuit identique au circuit 24-25 qui prend lui-même naissance à la base de la chambre 1 à distance de la sortie 24.

Les avantages de la présente invention sont multiples :
- possibilité d'obtenir une distribution étroite de la granulométrie des cristaux,
- possibilité de modifier à volonté la taille des cristaux en jouant sur l'élimination des fines, l'absence d'une telle élimination conduisant à des cristaux plus petits que ceux obtenus par élimination des fines,
- en cas de formation de blocs de soluté sur la surface interne de la paroi latérale cylindrique 4 de la chambre supérieure 2, ces blocs lorsqu'ils se détachent ne peuvent tomber dans la partie cylindrique 8 inférieure de la chambre inférieure 1 et bloquer l'extraction des cristaux,
- la technologie selon l'invention est utilisable pour petites et grandes capacités,
- facilité d'extrapolation à partir d'essais pilotes, car la circulation du liquide et des particules cristallines est « quasi-linéaire en l'absence d'agitateur (comme dans le cas du DTB),
- possibilité d'utiliser l'appareil soit comme un cristalliseur à circulation forcée (non destruction des fines), soit comme un cristalliseur du type DTB (avec destruction des fines) avec obtention de cristaux de grande taille,
- l'appareil peut être utilisé comme un réacteur-cristalliseur (cas où la solution est un mélange réactionnel dont le produit doit être cirstallisé), comme un séparateur-cristalliseur (cas où une purification est recherchée) ou comme un simple cristalliseur (cas où un soluté est recherché sous la forme de cristaux).

## Revendications

1. Appareil de cristallisation du soluté contenu dans une solution à traiter **caractérisé en ce qu'**il comprend :
- une première (2) et une deuxième (1) chambres destinées à recevoir ladite solution à traiter,
- des moyens (20) pour maintenir au moins une partie de cette solution dans un état de sursaturation pour y induire la formation de particules cristallines du soluté,
- des moyens pour assurer une circulation de ladite solution de la première chambre à la deuxième chambre pour maintenir en suspension lesdites particules cristallines,
- des moyens (11, 13) pour isoler, au sein de la deuxième chambre, dans au moins une zone calme (15) en communication avec cette dernière, une partie de la solution destinée à être présente dans cette deuxième chambre,
- un premier circuit (16, 17, 18, 19, 20, 23, 26, 25) pour extraire sélectivement de ladite zone calme, un premier courant de liquide comprenant des particules cristallines de soluté de plus petite dimension et pour recycler ce premier courant dans la première chambre, et
- un deuxième circuit (24, 25) pour extraire sélectivement de la deuxième chambre, un deuxième courant de liquide comprenant des particules cristallines de soluté de plus grande dimension, et pour amener ce deuxième courant dans la première chambre,
l'extrémité avale (26) du premier circuit débouchant dans le deuxième circuit de manière à ce que les premier et deuxième courants de liquide soient amenés à s'écouler dans le même sens dans ledit deuxième circuit, et lesdits moyens pour assurer la circulation de la solution de la première chambre à la deuxième chambre comprenant une pompe de circulation (18) disposée sur le premier circuit.

2. Appareil selon la revendication 1, **caractérisé en ce que** la partie d'extrémité avale (26) du premier circuit est disposée sensiblement concentriquement dans le deuxième circuit.

3. Appareil selon la revendication 1 ou 2, **caractérisé en ce que** les moyens pour maintenir la solution dans un état de sursaturation comprennent un dispositif de réchauffage du premier courant de liquide, disposé sur ledit premier circuit, et une sortie de vapeur (5a), prévue sur la deuxième chambre.

4. Appareil selon la revendication 3, **caractérisé en ce que** le dispositif de réchauffage comprend un échangeur de chaleur indirect (20) comprenant un circuit pour un fluide caloporteur (21, 22) et un circuit pour un fluide à réchauffer, ce dernier circuit constituant une partie dudit premier circuit.

5. Appareil selon la revendication 3, pour la cristallisation d'un soluté contenu dans une solution comprenant un mélange qui est le siège d'une réaction exothermique, **caractérisé en ce que** les moyens pour maintenir la solution dans un état de sursaturation comprennent la chaleur dégagée par cette réaction.

6. Appareil selon l'une quelconque des revendications précédentes, **caractérisé en ce qu'**il comprend un troisième circuit pour éliminer des particules cristallines d'une granulométrie donnée, de préférence les plus petites, parmi les particules cristallines présentes dans le premier courant de liquide ou dans la zone calme ou l'une des zones calmes de la deuxième chambre.

7. Appareil selon la revendication 6, **caractérisé en ce que** ledit troisième circuit comprend un séparateur solide-liquide (28) disposé sur le premier circuit, pour former un troisième courant de liquide contenant lesdites particules cristallines de granulométrie donnée, et des moyens de chauffage (30) de ce troisième courant pour dissoudre lesdites particules cristallines, ce troisième circuit se terminant dans le premier circuit.

8. Appareil selon la revendication 6, **caractérisé en ce que** ledit troisième circuit prend naissance dans la zone calme ou dans l'une des zones calmes de la deuxième chambre pour en extraire lesdites particules cristallines de granulométrie donnée sous la forme d'un courant de liquide, comprend des moyens de chauffage de ce courant pour dissoudre lesdites particules cristallines et se termine dans le premier circuit.

9. Appareil selon l'une quelconque des revendications 1 à 8, **caractérisé en ce que** la deuxième chambre (1) comprend une paroi latérale cylindrique sensiblement verticale (4) et est fermée par une paroi d'extrémité supérieure (5) et une paroi d'extrémité inférieure (6a), **en ce que** la première chambre (2) comprend une partie tubulaire (10) s'étendant sensiblement concentriquement à l'intérieur de la deuxième chambre en traversant la paroi d'extrémité inférieure (6a) de cette dernière, et **en ce que** lesdits moyens pour isoler au moins une partie de la solution dans la deuxième chambre comprennent une cloison (11, 13) qui prend naissance sur la paroi latérale cylindrique (4) de la deuxième chambre le long d'une partie au moins de cette dernière, s'étend sensiblement radialement vers l'intérieur de cette chambre, puis se prolonge en direction de la première chambre sensiblement parallèlement à la partie tubulaire (10) de cette dernière, pour définir ainsi ladite zone calme avec ladite paroi latérale cylindrique.

10. Appareil selon la revendication 9, **caractérisé en ce que** le deuxième circuit comprend un conduit (24, 25) prenant naissance dans la deuxième chambre (1) au voisinage de la zone où la paroi d'extrémité inférieure (6a) de cette deuxième chambre est traversée par la partie tubulaire (10) de la première chambre (2), ledit deuxième circuit se terminant dans cette dernière.

11. Appareil selon la revendication 9 ou 10, **caractérisé en ce que** la première chambre comprend à sa partie basse une zone (8) destinée à recevoir lesdites particules cristallines de plus grande dimension, cette zone étant pourvue d'une sortie (9) pour ces particules.

## Claims

1. Crystallizer for crystallizing the solute contained in a solution to be treated, **characterized in that** it comprises:
- first (2) and second (1) chambers intended to hold said solution to be treated;
- means (20) for keeping at least one portion of this solution in a state of supersaturation in order to form crystalline particles of the solute therein;
- means for circulating said solution from the first chamber to the second chamber in order to keep said crystalline particles in suspension;
- means (11, 13) for isolating, within the second chamber, in at least one calm zone (15) communicating with said second chamber, a portion of the solution intended to be present in this second chamber;
- a first circuit (16, 17, 18, 19, 20, 23, 26, 25) for selectively extracting, from said calm zone, a first stream of liquid comprising crystalline solute particles of smaller size and for recycling this first stream into the first chamber; and
- a second circuit (24, 25) for selectively extracting, from the second chamber, a second stream of liquid comprising crystalline solute particles of larger size and for bringing this second stream into the first chamber, the downstream end (26) of the first circuit running into the second circuit so that the first and second liquid streams are made to flow in the same direction in said second circuit, and said means for circulating the solution from the first chamber to the second chamber comprise a circulating pomp (18) placed in the first circuit.

2. Crystallizer according to Claim 1, **characterized in that** the downstream end portion (26) of the first circuit is placed approximately concentrically in the second circuit.

3. Crystallizer according to Claim 1 or 2, **characterized in that** the means for keeping the solution in a state of supersaturation comprise a heater, for heating the first stream of liquid, placed in said first circuit and a vapor outlet (5a) provided in the second chamber.

4. Crystallizer according to Claim 3, **characterized in that** the heater comprises an indirect heat exchanger (20) comprising a circuit for a heat-transfer fluid (21, 22) and a circuit for a fluid to be heated, the latter circuit constituting a portion of said first circuit.

5. Crystallizer according to Claim 3, for crystallizing a solute contained in a solution comprising a mixture which is the site of an exothermic reaction, **characterized in that** the means for keeping the solution in a state of supersaturation comprise the heat released by this reaction.

6. Crystallizer according to any one of the preceding claims, **characterized in that** it comprises a third circuit for removing crystalline particles of a given crystal size, preferably the smallest ones, from the crystalline particles present in the first stream of liquid or in the calm zone or one of the calm zones of the second chamber.

7. Crystallizer according to Claim 6, **characterized in that** said third circuit comprises a solid-liquid separator (28) placed in the first circuit, in order to form a third stream of liquid containing said crystalline particles of a given crystal size, and means (30) for heating this third stream so as to dissolve said crystalline particles, this third circuit terminating in the first circuit.

8. Crystallizer according to Claim 6, **characterized in that** said third circuit starts in the calm zone or in one of the calm zones of the second chamber for extracting therefrom said crystalline particles of a given crystal size in the form of a liquid stream, includes means for heating this stream, in order to dissolve said crystalline particles, and terminates in the first circuit.

9. Crystallizer according to any one of Claims 1 to 8, **characterized in that** the second chamber (1) comprises an approximately vertical cylindrical side wall (4) and is closed off by an upper end wall (5) and a lower end wall (6a), **in that** the first chamber (2) comprises a tubular part (10) extending, approximately concentrically, inside the second chamber, passing through the lower end wall (6a) of the latter, and **in that** said means for isolating at least one portion of the solution in the second chamber comprise a partition (11, 13) which starts on the cylindrical side wall (4) of the second chamber along at least one portion of the latter, extends approximately radially toward the interior of this chamber and then extends toward the first chamber approximately parallel to the tubular part (10) of the latter, so as thus to define, with said cylindrical side wall, said calm zone.

10. Crystallizer according to Claim 9, **characterized in that** the second circuit comprises a duct (24, 25) starting in the second chamber (1) near the zone where the lower end wall (6a) of this second chamber is penetrated by the tubular part (10) of the first chamber (2), said second circuit terminating in the latter.

11. Crystallizer according to Claim 9 or 10, **characterized in that** the first chamber includes, in its bottom part, a zone (8) intended to hold said larger crystalline particles, this zone being provided with an outlet (9) for these particles.

## Patentansprüche

1. Kristallisationsvorrichtung des in einer zu behandelnden Lösung gelösten Stoffs, **dadurch gekennzeichnet, dass** sie umfasst:
- eine erste (2) und eine zweite (1) Kammer, bestimmt zur Aufnahme der genannten zu behandelnden Lösung,
- Einrichtungen (20), um wenigstens einen Teil dieser Lösung in einem Übersättigungszustand zu halten, um darin die Bildung von Kristallpartikeln des gelösten Stoffes zu induzieren,
- Einrichtungen, um eine Zirkulation der genannten Lösung von der ersten Kammer in die zweite Kammer sicherzustellen, um die genannten Kristallpartikel in Lösung zu halten,
- Einrichtungen (11, 13), um im Innern der zweiten Kammer, in wenigstens einer mit dieser letzteren kommunizierenden ruhigen Zone (15), einen Teil der zur Präsenz in dieser zweiten Kammer bestimmten Lösung abzusondern,
- einen ersten Kreis (16, 17, 16, 19, 20, 23, 26, 25), um selektiv aus der genannten ruhigen Zone einen ersten Flüssigkeitsstrom mit Kristallpartikeln kleinerer Dimension des gelösten Stoffes abzuleiten und diesen ersten Strom in die erste Kammer zurückzuleiten, und
- einen zweiten Kreis (24, 25), um selektiv aus der zweiten Kammer einen zweiten Flüssigkeitsstrom mit Kristallpartikeln größere Dimension des gelösten Stoffes abzuleiten, und um diesen zweiten Strom der ersten Kammer zuzuführen,
wobei das stromabwärtsseitige Ende (26) des ersten Kreises so in den zweiten Kreis mündet, dass der erste und der zweite Flüssigkeitsstrom im zweiten Kreis in dieselbe Richtung fließen, und die genannten Einrichtungen zur Sicherstellung der Zirkulation der Lösung von der ersten Kammer in die zweite Kammer eine in dem ersten Kreis angeordnete Umlaufpumpe (18) umfassen.

2. Vorrichtung nach Anspruch 1, **dadurch gekennzeichnet, dass** der stromabwärtsseitige Teil (26) des ersten Kreises im Wesentlichen konzentrisch im zweiten Kreis angeordnet ist.

3. Vorrichtung nach Anspruch 1 oder 2, **dadurch gekennzeichnet, dass** die Einrichtungen zur Aufrechterhaltung des Übersättigungszustands der Lösung eine in dem genannten ersten Kreis angeordnete Aufwärmeinrichtung des ersten Flüssigkeitsstromes und einen in der zweiten Kammer vorgesehenen Dampfausgang (5a) umfassen.

4. Vorrichtung nach Anspruch 3, **dadurch gekennzeichnet, dass** die Aufwärmeinrichtung einen indirekten Wärmetauscher (20) mit einem Wärmeübertragungsmittel-Kreis (21, 22) und einem Kreis für ein Aufwärmfluid umfassen, wobei dieser letztere Kreis einen Teil des genannten ersten Kreises bildet.

5. Vorrichtung nach Anspruch 3 zur Kristallisierung eines in einer Lösung enthaltenen gelösten Stoffes, umfassend ein Gemisch, das der Sitz einer exothermischen Reaktion ist, **dadurch gekennzeichnet, dass** die Mittel zur Aufrechterhaltung des Übersättigungszustands der Lösung die durch diese Reaktion abgegebene Wärme umfasst.

6. Vorrichtung nach einem der vorhergehenden Ansprüche, **dadurch gekennzeichnet, dass** sie einen dritten Kreis umfasst, um Kristallpartikel einer bestimmten Korngröße - vorzugsweise die kleineren - unter denjenigen Kristallpartikeln zu eliminieren, die in dem ersten Flüssigkeitsstrom oder in der ruhigen Zone oder in einer der ruhigen Zonen der zweiten Kammer präsent sind.

7. Vorrichtung nach Anspruch 6, **dadurch gekennzeichnet, dass** der genannte dritte Kreis umfasst: einen in dem ersten Kreis angeordneten Feststoff-Flüssigkeitsseparator (26), um einen die genannten Kristallpartikel von bestimmter Korngröße enthaltenden dritten Flüssigkeitsstrom zu bilden, und Heizeinrichtungen (30) dieses dritten Stroms, um die genannten Kristallpartikel aufzulösen, wobei dieser dritte Kreis in dem ersten Kreis endet.

8. Vorrichtung nach Anspruch 6, **dadurch gekennzeichnet, dass** der genannte dritte Kreis in der ruhigen Zone oder in einer der ruhlgen Zonen der zweiten Kammer beginnt, um dort die genannten Kristallpartikel von bestimmter Korngröße in Form eines Flüssigkeitsstroms zu extrahieren, Heizeinrichtungen dieses Stroms umfasst, um die genannten Kristallpartikel aufzulösen, und im ersten Kreis endet.

9. Vorrichtung nach einem der Ansprüche 1 bis 8, **dadurch gekennzeichnet, dass** die zweite Kammer (1) eine im Wesentlichen senkrechte zylindrische Seitenwand (4) umfasst und abgeschlossen wird von einer oberen Endwand (5) und einer unteren Endwand (6a), und dadurch, dass die erste Kammer (2) einen rohrförmigen Teil (10) umfasst, der sich Im Wesentlichen im Inneren der zweiten Kammer erstreckt, wobei er die untere Endwand (6a) dieser letzteren durchquert, und dadurch, dass die genannten Einrichtungen zur Absonderung wenigstens eines Teils der Lösung in der zweiten Kammer eine Trennwand (11, 13) umfassen, die an der zylindrischen Seitenwand (4) der zweiten Kammer längs wenigstens eines Teils dieser letzteren beginnt, sich im Wesentlichen radial in Richtung Inneres dieser Kammer erstreckt und sich dann in Richtung erste Kammer verlängert, im Wesentlichen parallel zu dem rohrförmigen Teil (10) dieser letzteren, um auf diese Weise die genannte ruhige Zone mit der genannten zylindrischen Seitenwand zu definieren.

10. Vorrichtung nach Anspruch 9, **dadurch gekennzeichnet, dass** der zweite Kreis eine Leitung (24, 25) umfasst, die in der zweiten Kammer (1) in der Nähe der Zone beginnt, wo die untere Endwand (6a) dieser zweiten Kammer von dem rohrförmigen Teil (10) der ersten Kammer (2) durchquert wird, wobei der genannte zweite Kreis in dieser letzteren endet.

11. Vorrichtung nach Anspruch 9 oder 10, **dadurch gekennzeichnet, dass** die erste Kammer in ihrem unteren Teil eine zur Aufnahme der genannten größer dimensionierten Kristallpartikel bestimmte Zone (8) umfasst, wobei dieser Bereich mit einem Ausgang (9) für diese Partikel versehen ist.
